# EUROPEAN PATENT APPLICATION

(11) **EP 2 541 620 A1**
(43) Date of publication of application: **02.01.2013**
(21) Application number: 11746890.0
(22) Date of filing: 23.02.2011
(51) Int. Cl.: H01L 31/042

(54) **SOLAR COLLECTOR MODULE FOR ROOFS**

(30) Priority: 08.09.2010 ES 201001154; 26.02.2010 ES 201000203 U
(71) Applicant: Vicente Fernandez, Matias, 49731 Zamora (ES)
(72) Inventor: Vicente Fernandez, Matias, 49731 Zamora (ES)
(74) Representative: Isern-Jara, Nuria
(86) International application number: PCT/ES2011/000042
(87) International publication number: WO 2011/104397

(57) **Abstract**

This consists of a tubular shaped body with a rectangular section, in which there are two aluminium profiles (2, 3). Of these two profiles one profile (4) is made of polyimide or similar, to break the thermal bridge, said tubular body (1) is counted with internal wings (5) to support and fasten a glass panel (7) with adhesive, also with interior wings (6) for the support of the solar panel (8) and with lower wings (10) for fastening on an aluminium sheet (12) that retains a thermal blanket (17). Furthermore, the tubular body incorporates upper and exterior wings (15) on all sides for overlapping with adjacent modules. The intermediate sector is polyimide (4) and has ribs (13) on two adjacent sides and grooves (14) on the other two for the side by side tongue and groove connection between modules. Therefore the model is self-supporting and capable of being applied directly onto the beams of a building and of creating a watertight and thermo insulated seal that allows for the module to be used as a roof.

## Description

### OBJECTIVE OF THE INVENTION

The present invention refers to a solar collecting module, especially conceived to be used at roof level on different types of buildings. It carries out a double function, firstly, the derivative of its own nature as a solar collector based on a photovoltaic panel or similar, which forms part of the module, and secondly it constitutes the actual roof of the building.

And so the objective of the invention is to achieve that the top of a building, at roof level, once the bars and beams have been placed, is made of solar energy collecting modules. The objective of the invention is to do this without needing to put any element underneath the solar panels, in other words the absence of classic sheets, fibre-cement panels etc, obtaining in any case a perfect watertight seal and optimum thermal and acoustic insulation.

The objective of the invention is to optimise the performance of the solar collecting modules, regardless of the environmental temperature as well as to achieve maximum structural simplicity of the module that at the same time allows for extremely simple and quick assembly of the corresponding solar panel.

The invention is situated halfway between the industry of construction of premises with any practical use and the inherent solar energy collection industry.

### PRECENDENTS OF THE INVENTION

As is known, solar panels that are mounted on the roofs of buildings need to be attached to flat surfaces. In other words solar panels are usually mounted and attached to roof covering, for example metal panels, fibre-cement, etc.

On the other hand, the use of solar panels mounted directly onto a metal sheet base causes condensation problems and consequently causes leakages inside the building.

In any case the roof covering is necessary because the solar panels alone are not capable of establishing a watertight seal that also works as a thermo-acoustic barrier by themselves.

The aforementioned solar panels work as structural supports through various different profiles. They are generally aluminium and form rectangular frames in which the respective solar panels are fitted. Aluminium cross sections that form a thermal bridge make their existence under any conventional roof indispensible and conveniently thermo-isolated.

With this there is a complicated and consequently costly mechanisation process, this is increased in the same way as at the time of assembly, as the use of screws and bolting or similar measures for the permanent fastening between modules or supports is always necessary.

This problem happens in the commonly termed "solar farms" as well as when the panels are mounted on roofs, terraces or facades.

### DESCRIPTION OF THE INVENTION

The solar collection module for roofs that the invention proposes has been designed to resolve the previously exhibited problem, in the different aspects explained.

More specifically, the solar collection module is anticipated to be joined together with other similar panels and form the enclosure or superior covering of a building by being attached directly to the bars or beams of the structure. It presents the characteristic that from one rectangular frame has four profiles interconnected at a 45° angle by their edges so that each cross-section has three parts set up, two edges of different widths that are hollow for the connection of corresponding parts to respective brackets between which an attachment at a 45° angle between adjoining profiles takes place. They are concurrent on one vertex, whilst a middle part is made in polyimide, breaking the thermal bridge established in other parts of the profile that the frame constitutes.

One of the tubular edges of the profile of the frame, specifically the smallest, has a width of 1cm, while the opposite has a width of 4cm. The width of the polyimide, as an internal component, is 1cm, all of this in a form of preferential execution mentioned previously.

The section with the smallest width corresponding to the profile of the frame, presents an internal support and adhesive attachment to a protective glass panel of the solar panel. The glass panel has the characteristic that a chamber is created between each aforementioned glass panel and solar panel. The size of the grouping of the glass panel, the chamber and the solar panel determined is equivalent to the smallest profile section and the polyimide section.

The solar panel also supports and is fixed to an internal wing corresponding to the widest section of the frame. And the widest section of the frame determines a space which is filled with a thermal blanket, also anticipating on the edge of this wider section another internal support wing for a plate or aluminium sheet, to be used as a closing element for this interior space occupied by a thermal blanket. This aluminium sheet is attached with a plastic adhesive to the aforementioned wings of the widest section of the frame.

The module made in this way, by mounting it on a corresponding structure on the top of the building to which it is applied, should be prepared collaterally to others by interlinking. The optimum connection is that two of the adjoining edges of the frame represent a flap projected towards the exterior so that when the two modules join the flap of one of them is rested on the front or on the frame of the adjacent module.

Furthermore, the connection between modules is tongue and groove since the polyimide presents an angular protuberance foreseen in a cross section of the frame. A complementary recess is established in the polyimide in the adhering profile of the frame. When two modules join there is a union due to the tongue and groove effect which ensures an improved relative stability between modules.

On the other hand it should be said that the union or joining between the different modules, through the use of an adhesive applied to the entire surface of the external side, that is to say on all of its girth, improves water tightness. It is anticipated that there will be tapes or strips of aluminium that are also fixed with the appropriate adhesive in the joins between modules.

As is evident, the thermal blanket anticipated in the determined space between the solar panel and the edge of the widest section of the profiles of the frame constitutes a type of insulation of the interior with respect to the exterior in the corresponding area of the solar panel. This corresponding area of the frame is also thermally isolated through the polyimide as a breaking measure of the corresponding thermal bridge.

Lastly it is necessary to say that the fastening of the modules to the corresponding beams or strips of the building structure will be carried out by any conventional measure.

In this way a seal at the top of the building is achieved, incorporating solar panels without needing support surfaces as is conventionally required. Through the described solar collecting module the substitution of a classic asbestos roof or fixed panel as the covering of an enclosure is attempted and achieved. Condensation is eliminated and a high level of thermal and acoustic insulation is attained.

Although the invented module is designed to determine roofs with solar panels, it can also be used for other purposes like for the recovering of facades, fixed on the wall.

For this more precisely, the module that the invention proposes is made with the conjunction of a tubular body and a cover. The mentioned body being obtained by injection from plastic materials like for example PVC forming a frame or rectangular ring of dimensions that are in accordance with those of the solar panels that are destined. The tubular body that on the internal surface and at mid level in height internally incorporates a robust perimeter rib by means of settlement limit for the solar panel. The solar panel remains immobilised on the defined base due to the aforementioned rib with the help of the aforementioned covering.

The aforementioned covering is in a rectangular frame, "T" sectioned, so that through its transversal part the opening of the body is rested, on a staggered recess, at the same time it is supported by the solar panel, or the panel's protective glass. Meanwhile through its mid-branch and with the help of small complementary cradles operationally placed on the periphery both of the body and of the covering, the previously mentioned body is fixed by means of tongue and groove.

In agreement with the structure of the base body or the support has a perfect factory finish in the operation of injection moulding, the same happens with the complementary covering. Once the support is located in its permanent position it is sufficient to introduce the solar panel, and if it is the case the protective glass, and finally position this collection on the covering which is fixed with a simple vertical pressure which can be done manually.

From this basic structuring it is feasible that the inferior part of the body, that is to say that which is located under the perimeter rib, is partially or totally occupied by a thermo-insulating material like for example fibreglass wool, in which case the lower base of the body would be closed in order to retain this thermo-insulating filling.

In this last case and also in agreement with the specified application given to the support in each case, the lower base of the body can be equipped with a grille that allows for thermal dissipation. The block of thermo-insulating material can be equipped with vertical perforations that establish communication between the lower base and the gridding of the body with an air chamber between the block and the solar panel. This has the same purpose of dissipating heat through the lower grilles when the thermal level reached at the level of the panel is excessive and airing is deemed appropriate or necessary.

However, given that the entrance and exit orifices of air are situated at a level lower than the body of the support, and given that the hot air that tends to rise stabilises in the air chamber situated below the solar panel, the mobilisation of air in the aforementioned chamber is minimal and consequently the cooling effect of the solar panel is also minimal.

This problem is resolved by an improvement which is also an objective of the invention which is based on establishing a channelling of cool air that goes up the body of the support through its lower side and comes out in the chamber situated under the solar panel. A forced circulation is produced in the aforementioned chamber with an outlet across the perforations in the block of insulating material. This allows for an adequate air temperature to be maintained which is necessary for the correct refrigeration of the solar panel.

The aforesaid air current can be supplied by a ventilator, when the air temperature of the premises allows for this or by an air conditioning unit when cooler air refrigeration is required.

In any case, the repeatedly aforementioned air chamber will contain a thermostat to control the temperature and to send commands to the ventilator or air conditioning unit during times when this is necessary.

### DESCRIPTION OF THE DRAWINGS

To complement the description taking place and aiming to aid a better understanding of the characteristics of the invention, in accordance with a preferential practical execution example, the set of drawings are an integral part of said description. These drawings illustratively but not limitedly represent the following:
Figure 1- Shows a representation in perspective of a solar collecting module created in agreement with the objective of the invention.
Figure 2- Shows a corresponding view of a cross section of the module represented in the previous figure.
Figure 3- Shows a schematic perspective of the union between modules, specifically representing the union between four modules and at the intersection line of two pairs of adjoined modules, the tape or aluminium strip forming the watertight union between modules can be seen.
Figure 4- Shows a similar view to that in figure 2, but here various adjoined modules can be seen therefore allowing for the view of how every certain distance there is an expansion join for security.
Figure 5- Shows, according to an in perspective dissection, the aforementioned variant in the creation of the module.
Figure 6- Shows a cross section detail of the grouping displayed in figure 5, in the same state of dissection, but with the solar panel correctly connected to its base.
Figure 7- Shows a section similar to that shown in figure 6, in which the grouping of the abovementioned figure appears permanently assembled.
Figure 8- Shows a section similar to that displayed in figure 7 but corresponding to another variant of the design in which the area of the base body situated under the solar panel is partially occupied with the block of thermal-insulating material.
Figure 9-Shows, finally, a view like that in figure 4, incorporating the additional refrigeration system of the solar panel.

### PREFERENTIAL EXECUTION OF THE INVENTION

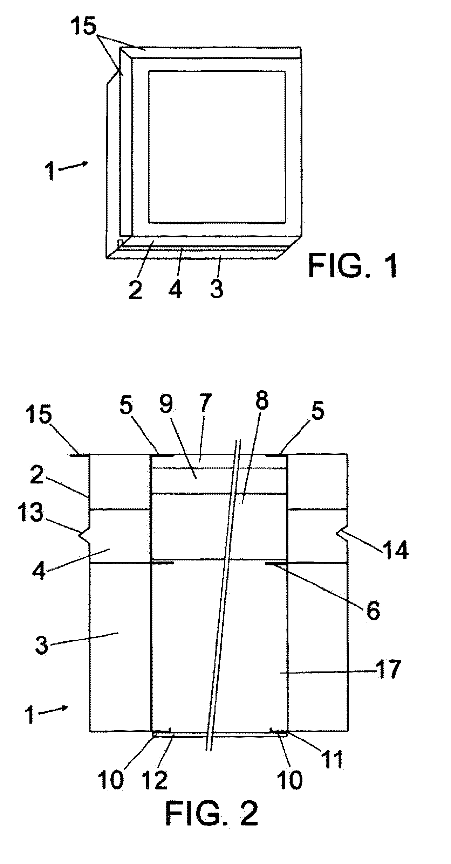

On viewing the reported figures, in particular from figures 1 to 3, the solar collection module (1) of the invention can be observed. It consists of four profiles at a 45° angle from a rectangular frame, mainly of aluminium. In each profile three parts are established, one edge (2) of less width, another edge (3) of a greater width and an intermediate (4) of polyimide. The edges (2 and 3) are tubular to allow for the connection of the respective brackets fixed with a 45° angle to the profiles that are combined in the vertexes of the rectangular frame.

Part (2) of the aluminium profile corresponding to the frame presents and internal wing (5), corresponding to its edge and exterior part, whilst part (3) of the profile corresponding to the frame is of greater width. Part (6) presents another internal wing. All this so that wing (5) supports a glass protection panel (7) for the corresponding solar panel (8) which will rest on wing (6), an air chamber (9) will be established between the glass panel (7) and the solar panel (8).

The determined space in correspondence with the section (3) of greater with of the corresponding profile of the aluminium frame, also presents wings (10) for attachment through the use of adhesive or glue (11) to an aluminium sheet (12) which closes this space which is occupied by a thermal blanket (17).

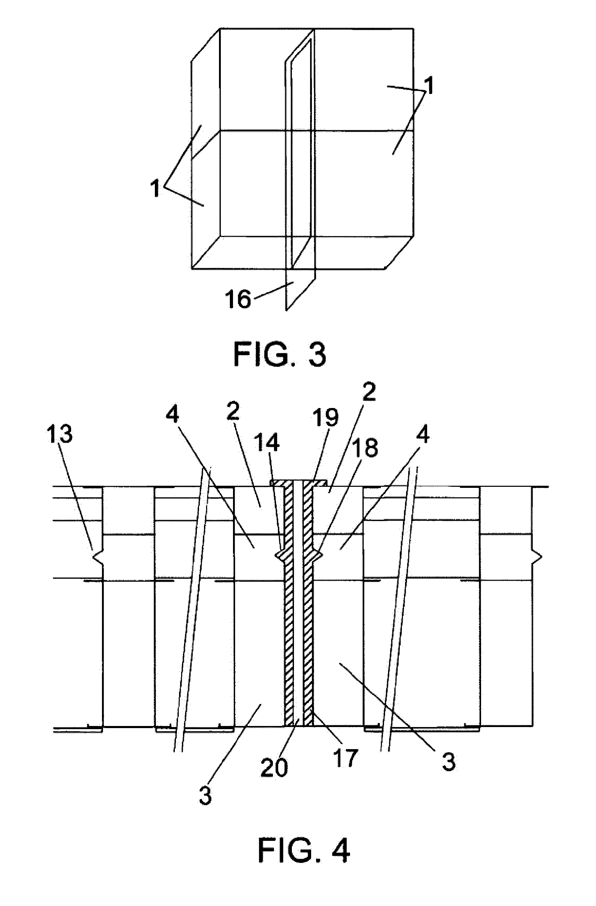

The join between modules (1), as is represented in figure 3, a tongue and groove connection is established as well as an attachment with adhesive between modules and the tongue and groove connection is achieved thanks to a projection (13) of the polyimide (4) and a complementary recess (14) of the same polyimide as the frame, so that the projection (13) of one module (1) fits in the recess (14) that, as is represented, is of an angular configuration in both cases. Therefore a tongue and groove effect is achieved which ensures optimum stability in the connection.

On the other hand, on the adjoining edges of the frame (1) a flap has been designed (15), projected towards the exterior and logically opposed to the flap (5), so that when the modules (1) join, the flap (15) of one of the modules rests on the front or on the frame of the adjoining module.

As well as using adhesive in the fastening between modules (1), on all the edges of the modules, to ensure a complete seal, the intersections between modules (1) will include strips or tapes of aluminium (16), also fixed using an appropriate adhesive, as is represented in figure 3.

Lastly, it is necessary to say that the modules (1) when fixed on the structure that form the bars and beams of the building, any appropriate conventional system could take place, allowing them to be complemented with expansion joins (17), that absorb the thermal expansions produced by the sun in the structure of the panels, together (17) that absorb the thermal expansions caused by the sun in the structure of the panels. The section agrees with the female profile of the edges of the module, with respective ledges (18) in accordance with the recesses (14). Therefore when a pair of greater expansions (19) through elements of sealing, permit for the connection between modules of different forms, together they have a through hole (20) to pass the screws of the roof.

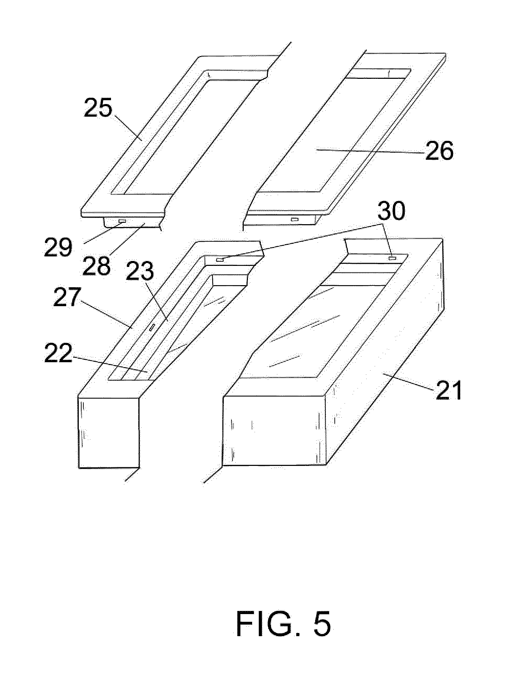

In the execution variant represented in figures 5 to 8, and to completely annul the thermal bridge whilst considerably facilitating both the fabrication and the assembly of the modules, a single piece base body module (21) preferably of injected PVC will be created. The body will have a type of frame or rectangular ring that on its internal wall will have a perimeter (22) rib designed as a perimeter support (23) for the solar panel (24) designed to rest on the aforementioned support (22). The body (21) is complemented with a covering (25) that at the same time forms a rectangular frame. This is defined in the same wide window (26) that mainly is for the passing of solar radiation to the panel (24), representing the abovementioned covering (25) a "T" shaped profile so that through its transversal section that corresponds with the reference (25), is supported on the opening of the body (21), either on the entire opening (27) like in the case of figure 1 or on a staggered recess (27') as in the case of figure 2. This transversal part of the covering (25) because of its marginal internal area is destined to retain the solar panel (24) either by directly resting on it or with the interposition of the classic protection glass, not shown in the figures.

The vertical branch (28) of the covering (25) is destined to tightly penetrate the interior of the body (21), as can be seen especially in figure 3 and to constitute the form of setting of the aforementioned body which presents a number of small teeth (29) on its external side which are adequately distributed on its periphery, complementary to others (30) which exist on the internal side of the body (21) above the support (23) defined by the rib (22) . This is so that in a situation of a limit of penetration of the vertical branch of the covering on the opening of the body, the complementary teeth (29 and 30) embed themselves, leaving the covering (25) perfectly immobilised with regards to the body (21) and immobilising the solar panel (24) at the same time.

As has been said earlier and as is shown in figure 4, in some circumstances of assembly the solar panels (24) must be assisted by a thermal insulating covering situated under the panels in order to avoid thermal losses.

In this case, as is shown in figure 4, the lower base of the body (21) is closed, to constitute the settlement surface for the block (31) made from thermo-insulating material, which obviously is introduced in the body (21) through its upper opening (27, 27') before the installation of the solar panel (24) and of the covering (25).

More precisely, in the practical execution of figure 4 not only does it have an insulating block (31) foreseen to avoid thermal losses in the solar panel (24), but also the possibility of dissipation of heat when the panel (24) reaches temperature levels so high that refrigeration is advisable. To do this the closed base of the body (21) is equipped with ventilation grilles (32) that incorporate vertical perforations (43) to the block of insulating material. Above the aforesaid block an air chamber (34) will be created so that the chamber receives the heat dissipated from the solar panel directly through its lower side, it is in communication through, the insulating block (31) and the grille (32) of the body (21), with the exterior atmosphere situated under the grouping.

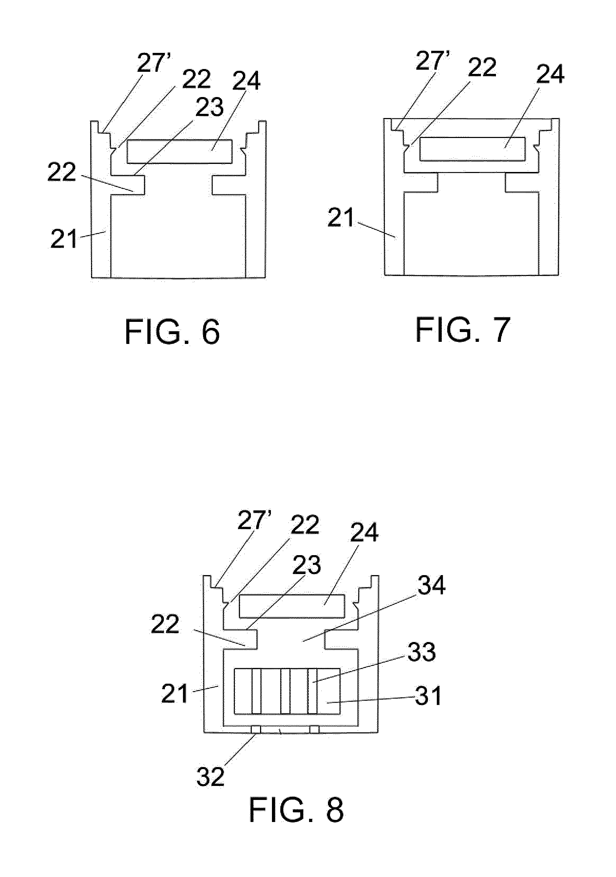

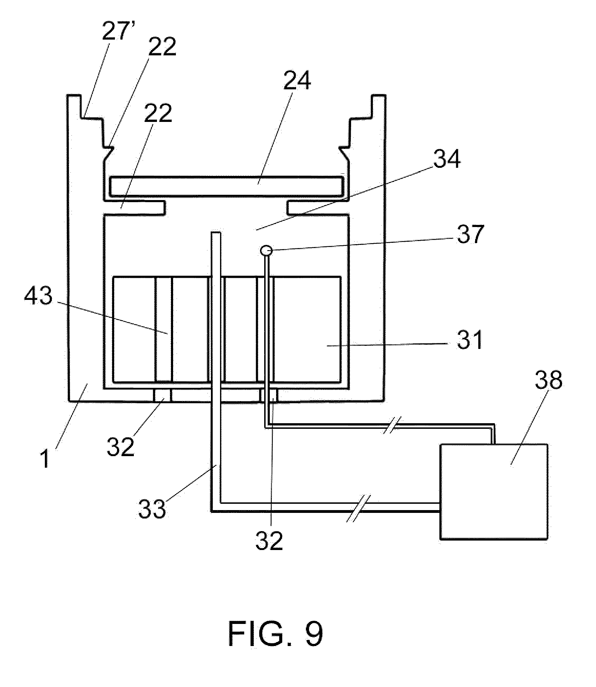

In an improvement applied to the execution variant of figure 8, and displayed in figure 9, a conduction (33) coming from a ventilator or air conditioning unit has been anticipated. The conduction (33) crosses the base (34) and the insulating material block (31) insufflating cold air to the chamber (34) towards the lower side of the solar panel (24) causing it to cool. More precisely the air supplied to the chamber (34) through conduction (33) and after absorbing the heat generated by the solar panel (24), reaches the exterior through the vertical perforations (33) of the insulating block (11), or from another or other conductions carried out in the case of the insulation block originally lacking these perforations.

To control the temperature of the air chamber (34), to maintain the appropriate refrigeration of the solar panel (24) at all times, a thermostat (37) will be situated in the chamber (34) that interrupts the input of air through the conduct (33), that causes the ventilator or air conditioning unit (38) to stop, when the temperature of the chamber (14) decreases to under a previously established optimal limit.

## Claims

1. Solar collecting module for roofs that integrates a solar panel in its structure. Therefore it is a support for the solar panel. The support is **characterised by** being made up of a tubular body (2-3-4; 21), equipped with attaching measures for the solar panel (8; 24) and also equipped with adequate fastening to the bars and beams of the roof of the building. The aforementioned tubular body incorporates, at least a portion (4; 21) of thermal isolation material, such as polyamide, a determining factor of a thermal break between the exterior and interior faces of the module.

2. Solar collecting module for roofs, according to claim 1, is characterised because the aforementioned tubular body forms a type of rectangular frame made up of four profiles fixed together at a 45° angle. Each profile is determined by two aluminium end sections (2; 3); between both end sections there is an intermediate polyamide section (4). The interior and lower end section (3) is wider than sections (2) and (4), which are noticeably coincident taking into account the ring-shaped body, specifically the profiles of the aluminium (2), with internal wings (5) upon which a glass panel is supported (7). This panel is fixed with adhesive, while the lower or widest aluminium section (3) incorporates wings (6) to support the solar panel (8) under which a thermal blanket is situated (17), corresponding with the widest aluminium section (3) that closes on the underside with an aluminium panel (12), via adhesive (11), attachable to the wings (10) anticipated internally in the widest section (3)of the tubular body.

3. Solar collecting module for roofs, according to previous claims, has the distinctive property of the part relating to the polyamide (4) which exhibits an angular projection (13) on two external and adjoining faces, and an angular and complementary recess (14) on the other two faces, determined by tongue and groove fitting together in the lateral union between modules.

4. Solar collecting module for roofs, according to previous claims, has the distinctive property of two adjacent edges of the foreseen frame, in comparison with the internal wing (5), a flap (15) that in the fitting together between modules rests on the front of the frame corresponding to the adjacent module.

5. Solar collecting module for roofs, according to previous claims, **characterised by** the modules (1) that are attached together with adhesive, with the help of aluminium strips (16) arranged like flashing in the join between modules.

6. Solar collecting module for roofs, according to claim 1, has the distinctive property of the tubular body (21) that is complemented with a lid (25). It is materialised both with a number of one-piece plastic elements, preferably PVC, obtained via injection moulding. The formal and dimensional tubular body (21) is suitable to receive the solar panel (24) in its structure. This has a robust peripheral arch nerve (22) determined by a peripheral rest (23) for the solar panel. Meanwhile, the lid (25) mainly affected by a wide central window (26) to allow for the passing of the solar radiation to the panel (24) has a T shape and the horizontal branch rests on the upper opening of the body (21) and simultaneously constitutes a means of restraint for the solar panel (24). Meanwhile, the vertical branch (28) is designed to adjustably fit together inside the body (21), it incorporates means of attachment (29) to the aforementioned body (21), on its exterior face complementary to the existing means (30) in the internal face of the body.

7. Solar collecting module for roofs, according to claims 1 and 7, **characterised by** the aforementioned means of attachment of the lid (25) to the body (21) which consist of teeth (29) on said lid and complementary to teeth (30) on said body, the teeth are adequately distributed on the periphery of these elements, so that the attachment is on the limit of penetration of the lid in the body, in which the teeth (29) of the lid surpass the teeth (30) of the body.

8. Solar collecting module for roofs, according to claims 1, 6 and 7, has the distinctive property of when it is necessary for the solar panel (24) to be heat-insulated on its lower side; the base body (21) has its lower opening closed to constitute the support base for the block (31) of heat-insulating material.

9. Solar collecting module for roofs, according to claim 8, is characterised because said lower base of the body (21) has slatted areas (32) to allow for air to pass, whilst the block (31) of hear-insulating material has vertical perforations (33) that communicate an air chamber (34), situated between the aforementioned block and the solar panel, with the lower grilles (32) and across these to outside of the support.
